# EUROPÄISCHE PATENTSCHRIFT

(11) **EP 3 713 188 B1**
(45) Veröffentlichungstag und Bekanntmachung des Hinweises auf die Patenterteilung: **19.06.2024**
(21) Anmeldenummer: 19163812.1
(22) Anmeldetag: 19.03.2019
(51) Int. Cl.: H04L 9/40

(54) **VERFAHREN UND ÜBERTRAGUNGSVORRICHTUNG ZUR DATENÜBERTRAGUNG ZWISCHEN ZWEI NETZWERKEN**
METHOD AND APPARATUS FOR DATA TRANSMISSION BETWEEN TWO NETWORKS
PROCÉDÉ ET DISPOSITIF DE TRANSMISSION DESTINÉS À LA TRANSMISSION DES DONNÉES ENTRE DEUX RÉSEAUX

(43) Veröffentlichungstag der Anmeldung: 23.09.2020
(73) Patentinhaber: Siemens Mobility GmbH, 81739 München (DE)
(72) Erfinder: Bauer, Christian, 80339 München (DE); Falk, Rainer, 85586 Poing (DE); Seifert, Matthias, 21244 Buchholz (DE); Wimmer, Martin, 85579 Neubiberg (DE)
(74) Vertreter: Siemens Patent Attorneys

(56) Entgegenhaltungen:
- EP-A1- 3 425 865
- DE-A1-102015 205 833
- US-A1- 2015 215 075
- US-A1- 2018 351 914
- Anonymous: "Session (computer science) - Wikipedia", , 8. Januar 2019 (2019-01-08), XP055605935, Gefunden im Internet: URL:https://en.wikipedia.org/w/index.php?t itle=Session_(computer_science)&oldid=8773 59736 [gefunden am 2019-07-16]
- Anonymous: "Protocol data unit - Wikipedia", , 6 March 2019 (2019-03-06), XP055882085, Retrieved from the Internet: URL:https://en.wikipedia.org/w/index.php?t itle=Protocol_data_unit&oldid=886473409 [retrieved on 2022-01-20]
- Anonymous: "Transmission Control Protocol ? Wikipedia", , 31 July 2018 (2018-07-31), XP055623931, Retrieved from the Internet: URL:https://de.wikipedia.org/w/index.php?t itle=Transmission_Control_Protocol&oldid=1 79596123 [retrieved on 2019-09-19]

## Beschreibung

Die Erfindung betrifft ein computerimplementiertes Verfahren und eine Übertragungsvorrichtung zur Datenübertragung zwischen einem ersten Netzwerk mit hoher Sicherheitsanforderung und einem zweiten Netzwerk mit geringer Sicherheitsanforderung, wobei die jeweilige Kommunikation insbesondere unidirektional realisiert ist.

Zur sicheren Kommunikation zwischen einem sicherheitskritischen und einem offenen Netzwerk, wie z.B. einem industriellen Steuerungsnetzwerk (engl. Industrial Control Network oder Operational Network) und einem klassischen IT-Netzwerk, können beispielsweise Einwegkommunikationseinheiten, wie z.B. Datendioden, eingesetzt werden, um eine unidirektionale Datenübertragung zu ermöglichen. Eine Datendiode mit Feedbacckanal, auch als bidirektionaler Network Guard oder Security Gateway bezeichnet, ermöglicht einen sicheren Datentransfer zwischen zwei Informationsbereichen mit unterschiedlichen Sicherheitsstufen. Ein Network Guard ist in der Regel eine Kombination aus Hardware und Software und ermöglicht mehr Funktionalität als Firewalls.

Ein bidirektionaler Network Guard ist in der Regel derart aufgebaut, zwei voneinander getrennte unidirektionale Datenströme jeweils mittels einer Datendiode zu realisieren, wobei die Datenströme in entgegengesetzte Richtung fließen. Dies erlaubt einen Datenaustausch in beide Richtungen, wobei jeweils die Einwegfunktion gewährleistet ist. Beispielsweise können mit einem bidirektionalen Network Guard Daten aus einem Netzwerk mit hoher Sicherheitsanforderung in ein offenes Netzwerk mit geringer Sicherheitsanforderung bzw. vom Netzwerk mit geringer Sicherheitsanforderung an ein Netzwerk mit hoher Sicherheitsanforderung übermittelt werden.

In dem Fall, dass ein Datentransfer zwischen Netzwerken mit unterschiedlicher Sicherheitsanforderung verlässlich, d.h. korrekt, vollständig und den Sicherheitsanforderungen genügend, durchgeführt werden soll, sind in der Regel zusätzliche Transferbestätigungen notwendig, die zwischen den Netzwerken ausgetauscht werden. Unter einem "verlässlichen" oder "zuverlässigen" Datentransfer kann insbesondere ein vollständiger und fehlerfreier Datentransfer verstanden werden.

Bei einem Datentransfer vom Netzwerk mit geringer Sicherheitsanforderung in das Netzwerk mit hoher Sicherheitsanforderung ist in der Regel eine zusätzliche Prüfung notwendig, um die Integrität und/oder Sicherheit des Netzwerks mit hoher Sicherheitsanforderung und/oder die Netzwerkverfügbarkeit zu gewährleisten.

Aus US 2018/351914 A1 ist ein Datenhub bekannt, der eine Datenkommunikation zwischen zwei Domänen ermöglicht, wobei der Datenhub einen Prozessor umfasst, der derart eingerichtet ist, empfangene Daten anhand vorgegebener Regeln zu überprüfen und lediglich zugelassene Daten in die andere Domäne zu übertragen.

Aus US 2015/215075 A1 ist ein System zur unidirektionalen Datenübertragung von einem Netzwerk mit hohem Sicherheitsniveau zu einem Netzwerk mit niedrigerem Sicherheitsniveau bekannt, wobei ein Ergebnis einer Datenüberprüfung der übertragenen Daten über einen separaten Kanal zurückgesendet werden kann. Es ist demnach eine Aufgabe der vorliegenden Erfindung, für einen Datenaustausch zwischen zwei Netzwerken mit unterschiedlicher Sicherheitsanforderung, eine Datenübertragung von dem einen in das andere Netzwerk jeweils einen unidirektionalen Datentransfer mit Bestätigung der Datenübertragung flexibel zu ermöglichen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt. Gemäß einem ersten Aspekt betrifft die Erfindung ein computerimplementiertes Verfahren zur Datenübertragung zwischen einem ersten Netzwerk mit hoher Sicherheitsanforderung und einem zweiten Netzwerk mit geringer Sicherheitsanforderung, gemäß Anspruch 1.

Unter "computerimplementiert" kann im Zusammenhang mit der Erfindung eine Implementierung des Verfahrens verstanden werden, bei dem insbesondere ein Prozessor mindestens einen Verfahrensschritt ausführt.

Gemäß einem zweiten Aspekt betrifft die Erfindung eine Übertragungsvorrichtung eingerichtet zur Datenübertragung nach einem der Ansprüche 1 bis 8 zwischen einem ersten Netzwerk mit hoher Sicherheitsanforderung und einem zweiten Netzwerk mit geringer Sicherheitsanforderung, umfassend
- eine erste Empfangseinheit und eine erste Sendeeinheit, die jeweils im ersten Netzwerk angeordnet sind,
- eine zweite Empfangseinheit und eine zweite Sendeeinheit, die jeweils im zweiten Netzwerk angeordnet sind,
- eine erste Einwegkommunikationseinheit, die zwischen dem ersten und zweiten Netzwerk angeordnet und derart eingerichtet ist, bei einer Datenübertragung von der ersten Sendeeinheit zur zweiten Empfangseinheit ein Datenpaket zu übertragen,
- eine zweite Einwegkommunikationseinheit, die zwischen dem zweiten und ersten Netzwerk angeordnet ist, für eine Datenübertragung vom zweiten in das erste Netzwerk, und
- eine Validierungseinheit, die zwischen dem zweiten und ersten Netzwerk angeordnet und derart eingerichtet ist, bei einer Datenübertragung von der zweiten Sendeeinheit zur ersten Empfangseinheit ein Datenpaket anhand einer vorgegebenen Regel zu validieren.

Es ist ein Vorteil der vorliegenden Erfindung, dass eine flexible Übertragungsvorrichtung und ein Übertragungsprotokoll bereitgestellt werden, die eine sichere Datenübertragung vom Netzwerk mit hoher Sicherheitsanforderung ins Netzwerk mit geringerer Sicherheitsanforderung und umgekehrt sowohl mit als auch ohne Bestätigung der Durchführung oder Vollständigkeit der Datenübertragung ermöglichen. Es kann insbesondere das Erfordernis, das erste Netzwerk vor unerwünschten Datenverkehr aus dem zweiten Netzwerk zu schützen, erfüllt werden.

Es kann insbesondere bei einer Übertragung eine Überprüfung pro Sitzung (engl. Session), im Weiteren auch als "Session" bezeichnet, realisiert werden, so dass weniger Kontrolldatenpakete übermittelt werden. Derart kann der Overhead verringert werden. Ein weiterer Vorteil der Erfindung ist es, dass ein Protokoll definiert wird, das sowohl für unidirektionale als auch bidirektionale Datenübertragungen genutzt werden kann.

Die Validierungseinheit ermöglicht, den Datenverkehr vom zweiten Netzwerk in das erste Netzwerk zu validieren und dadurch zu kontrollieren. Die Datenübertragung vom ersten in das zweite Netzwerk wird über eine unidirektionale Datenverbindung und ohne Validierung durchgeführt.

Bei negativer Validierung eines Datenverkehrs vom zweiten in das erste Netzwerk kann insbesondere lediglich ein Datenpaket, beispielsweise ein Kontrolldatenpaket, von der Validierungseinheit erstellt und an das zweite Netzwerk zurückübertragen werden. Damit kann eine Information über einen Übertragungsfehler oder eine Manipulation der Daten an den ursprünglichen Sender übermittelt werden.

Die erste Einwegkommunikationseinheit ermöglicht eine unidirektionale Datenübertragung. Die erste Einwegkommunikationseinheit kann beispielsweise als Datendiode oder als Mithöreinrichtung, die lediglich einen Datenverkehr passiv mithört und die mitgehörten Daten weiterleitet, ausgestaltet sein.

Die Datenübertragung vom ersten in das zweite Netzwerk und vom zweiten Netzwerk in das erste Netzwerk sind jeweils unidirektional ausgebildet.

Es können pro Session mindestens ein Datenpaket oder mehrere Datenpakete übertragen werden.

In einer vorteilhaften Ausführungsform des computerimplementierten Verfahrens kann zwischen der Empfangseinheit und der Sendeeinheit im ersten Netzwerk und/oder zwischen der Empfangseinheit und der Sendeeinheit im zweiten Netzwerk mindestens ein Datenpaket übertragen werden.

Es können insbesondere Bestätigungsnachrichten zwischen den jeweiligen Sende- und Empfangseinheiten übertragen werden. Dies ermöglicht insbesondere einen Rückkanal zu realisieren, ohne die Rückwirkungsfreiheit der einzelnen Übertragungswege zwischen den Netzwerken zu beeinträchtigen. Beispielsweise kann eine Rückmeldung auf ein vom ersten Netzwerk in das zweite Netzwerk gesendetes Datenpaket über die Validierungseinheit an das erste Netzwerk zurückübermittelt werden. Die Datenübertragung verläuft jeweils unidirektional über eine Einwegkommunikationseinheit.

In einer vorteilhaften Ausführungsform des computerimplementierten Verfahrens kann ein erstes oder zweites Datenpaket als ein Nutzdatenpaket oder als ein Kontrolldatenpaket ausgestaltet sein.

Insbesondere können pro Sitzung mindestens ein Kontrolldatenpaket und mindestens ein Nutzdatenpaket übertragen werden.

Ein Nutzdatenpaket umfasst Nutzdaten, wohingegen ein Kontrolldatenpaket beispielsweise Informationen zur Durchführung einer Empfangsbestätigung und/oder einer Vollständigkeitsprüfung der transferierten Nutzdaten umfasst. Des Weiteren kann ein Kontrolldatenpaket einen Sitzungsaufbau veranlassen.

In einer vorteilhaften Ausführungsform des computerimplementierten Verfahrens kann, wenn die Validierung des zweiten Datenpakets in der Validierungseinheit negativ ausfällt, ein Kontrolldatenpaket von der Validierungseinheit ausgestellt und das Kontrolldatenpaket über das erste Netzwerk an das zweite Netzwerk übertragen werden.

Auf diese Weise kann eine Datenübertragung vom zweiten ins erste Netzwerk einfach unterbunden werden. Das zweite Datenpaket kann insbesondere ein Kontroll- oder Nutzdatenpaket sein. Das von der Validierungseinheit ausgestellte Kontrolldatenpaket kann beispielsweise Informationen über die Validierung, wie z.B. ein Prüfergebnis, umfassen.

In einer vorteilhaften Ausführungsform des computerimplementierten Verfahrens kann einem Nutzdatenpaket einer Sitzung eine eindeutige Sitzungskennung zugeordnet werden.

Die Struktur oder Datenstruktur eines Nutzdatenpakets umfasst Nutzdaten und eine Sitzungskennung. Die Struktur kann außerdem insbesondere eine Datenpaket-Identifikationskennung, eine Prüfsumme des Datenpakets, eine Typinformation und/oder eine Applikations-Identifikationsnummer umfassen.

In einer vorteilhaften Ausführungsform des computerimplementierten Verfahrens kann dem Kontrolldatenpaket eine Sitzungskennung, eine Datenpaket-Identifikationskennung und eine Sender- und/oder Empfängerinformation zugeordnet werden.

Die Struktur eines Kontrolldatenpakets kann des Weiteren insbesondere eine Prüfsumme des Kontrolldatenpakets, eine Datenpaket-Identifikationskennung, die dem Kontrolldatenpaket zugeordnet ist, eine Typinformation, mindestens eine Kennzeichnung (engl. Flag) und/oder eine Information über die Größe der Datenübertragung der jeweiligen Session umfassen.

In einer vorteilhaften Ausführungsform des computerimplementierten Verfahrens kann bei einer Datenübertragung vor der Übertragung eines Nutzdatenpakets ein Kontrolldatenpaket übertragen werden.

Insbesondere kann eine Datenübertragung zwischen dem ersten und zweiten Netzwerk mit einer Bestätigung einer korrekt ausgeführten Datenübertragung durchgeführt werden, wobei pro Sitzung mindestens ein Kontrolldatenpaket übermittelt wird. Das Kontrolldatenpaket kann insbesondere eine Information zum Aufbau oder zum Beenden einer Sitzung umfassen. Es können mehr als ein Nutzdatenpaket pro Sitzung übermittelt werden. Eine Übertragung mit Bestätigung hat insbesondere den Vorteil, dass eine zuverlässige Übertragung gewährleistet werden kann.

In einer vorteilhaften Ausführungsform des computerimplementierten Verfahrens kann bei Akzeptanz des Kontrolldatenpakets ein Nutzdatenpaket übertragen werden und bei Nicht-Akzeptanz des Kontrolldatenpakets die Datenübertragung abgebrochen und lediglich ein weiteres Kontrolldatenpaket zurückübertragen werden.

Ein Kontrolldatenpaket kann insbesondere eine Kennzeichnung für einen Aufbau einer Sitzung umfassen. Bei Akzeptanz des Kontrolldatenpakets durch den Empfänger, kann eine Sitzung aufgebaut und mindestens ein Nutzdatenpaket übertragen werden. Bei Nicht-Akzeptanz des Kontrolldatenpakets kann ein weiteres Kontrolldatenpaket an den jeweiligen Sender zurückübermittelt werden. Die Prüfung auf Akzeptanz eines Datenpakets kann insbesondere in einer Empfangseinheit eines Netzwerks durchgeführt werden.

Erfindungsgemäß wird in dem computerimplementierten Verfahren bei einer Datenübertragung vom ersten Netzwerk in das zweite Netzwerk
- ein erstes Kontrolldatenpaket vom ersten Netzwerk in das zweite Netzwerk übertragen werden,
- das erste Kontrolldatenpaket im zweiten Netzwerk auf Akzeptanz geprüft werden,
- und falls das erste Kontrolldatenpaket akzeptiert wird, kann ein zweites Kontrolldatenpaket vom zweiten Netzwerk an die Validierungseinheit übertragen, dort validiert und bei positiver Validierung an das erste Netzwerk übertragen werden, und mindestens ein Nutzdatenpaket kann vom ersten Netzwerk an das zweite Netzwerk übertragen und ein drittes Kontrolldatenpaket vom ersten Netzwerk an das zweite Netzwerk übertragen werden.

Das dritte Kontrolldatenpaket wird insbesondere nachdem alle Nutzdatenpakete der Sitzung gesendet wurden übermittelt. Falls das erste Kontrolldatenpaket nicht akzeptiert wird, kann die Datenübertragung abgebrochen und lediglich ein Kontrolldatenpaket, das beispielsweise eine Information über einen Übertragungsfehler oder eine Manipulation der Daten umfasst, an das erste Netzwerk übertragen werden.

Erfindungsgemäß wird in dem computerimplementierten Verfahren anhand des ersten und des dritten Kontrolldatenpakets eine Vollständigkeit des übertragenen Nutzdatenpakets im zweiten Netzwerk überprüft und ein viertes Kontrolldatenpaket, das das Prüfergebnis umfasst, an das erste Netzwerk übertragen werden.

Insbesondere kann nach einer Übertragung der Nutzdaten eine Vollständigkeitsprüfung und Überprüfung auf Übertragungsfehler oder Verfälschungen anhand der Kontrolldatenpakete, die zu Beginn und Ende der Sitzung übermittelt wurden, durchgeführt werden. Beispielsweise kann überprüft werden, ob ein Empfänger die im ersten Kontrolldatenpaket angekündigte Transferdatenmenge empfangen hat, d.h. im dritten Kontrolldatenpaket dieselbe Transferdatenmenge angegeben ist. Auf diese Weise können beispielsweise Übertragungsfehler detektiert und insbesondere an den ursprünglichen Sender zurückübermittelt werden.

In einer vorteilhaften Ausführungsform der Übertragungsvorrichtung kann
- die erste Empfangseinheit und die erste Sendeeinheit auf einer ersten Komponente im ersten Netzwerk,
- die zweite Empfangseinheit und die zweite Sendeeinheit auf einer zweiten Komponente im zweiten Netzwerk,
   und
- die Validierungseinheit und die erste Einwegkommunikationseinheit auf einer dritten Komponente eingerichtet sein.

In einer vorteilhaften Ausführungsform der Übertragungsvorrichtung können die erste Einwegkommunikationseinheit und die Validierungseinheit jeweils auf einer separaten Komponente eingerichtet sein.

Eine Komponente, insbesondere eine Netzwerkkomponente, kann insbesondere als eine Hardware-Komponente ausgebildet sein. Eine Komponente kann insbesondere einen Prozessor umfassen.

Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit) oder um ein Multi-Chip-Modul handeln, insbesondere einen FPGA (engl. Field Programmable Gate Array) oder einen ASIC (anwendungsspezifische integrierte Schaltung, engl. Application-Specific Integrated Circuit), ein SoC (System on Chip) einen Grafikprozessor GPU (Graphics Processing Unit), einen Prozessor zur Auswertung eines neuronalen Netzes wie beispielsweise eine TPU (Tensor Processing Unit) oder einen DSP (Digitaler Signalprozessor, engl. Digital Signal Processor) handeln. Der Prozessor kann eine oder mehrere Rechenkerne (multi-core) aufweisen. Auch kann unter einem Prozessor ein virtualisierter Prozessor oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens oder anderer Aspekte und Teilaspekte der Erfindung implementiert. Der Prozessor kann einen Tamper-Schutz zum Schutz vor physikalischen Manipulationen aufweisen, z.B. Tamper-Sensoren zur Detektion physikalischer Angriffe.

Des Weiteren betrifft die Erfindung ein Computerprogrammprodukt, das direkt in einen programmierbaren Computer ladbar ist, umfassend Programmcodeteile, die dazu geeignet sind, die Schritte eines erfindungsgemäßen computerimplementierten Verfahrens durchzuführen.

Ein Computerprogrammprodukt, wie zum Beispiel ein Computerprogramm-Mittel, kann beispielsweise als Speichermedium oder Datenträger, wie zum Beispiel als Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen computerimplementierten Verfahrens und der Übertragungsvorrichtung sind in den Zeichnungen beispielhaft dargestellt und werden anhand der nachfolgenden Beschreibung näher erläutert. Es zeigen:
- Fig. 1:: ein Ablaufdiagramm eines erfindungsgemäßen Verfahrens;
- Fig. 2:: eine schematische Darstellung einer erfindungsgemäßen Übertragungsvorrichtung;
- Fig. 3:: eine schematische Darstellung einer weiteren erfindungsgemäßen Übertragungsvorrichtung;
- Fig. 4:: eine schematische Darstellung eines Nutzdatenpakets;
- Fig. 5:: eine schematische Darstellung eines Kontrolldatenpakets;
- Fig. 6:: ein Beispiel eines nicht erfindungsgemäßen Verfahrens als Sequenzdiagramm; Und
- Fig. 7:: ein weiteres Ausführungsbeispiel eines erfindungsgemäßen Verfahrens als Sequenzdiagramm.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(-komponenten) oder ausschließlich per Software(- komponenten) realisiert werden. Alternativ und/oder zusätzlich kann der Fachmann im Rahmen seines fachmännischen Könnens weitestgehend beliebige erfindungsgemäße Kombinationen aus Hardware(-komponenten) und Software(-komponenten) wählen, um erfindungsgemäße Realisierungsvarianten umzusetzen.

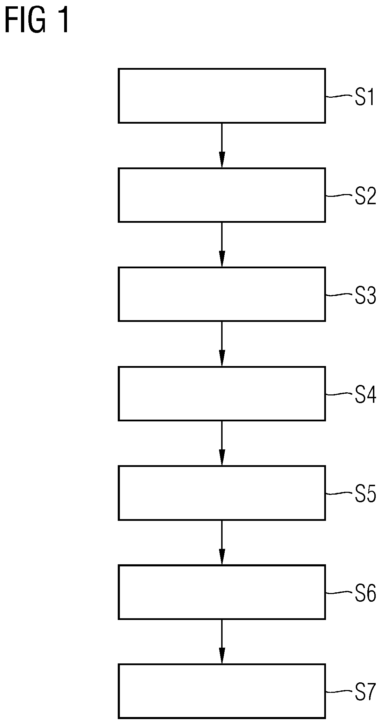

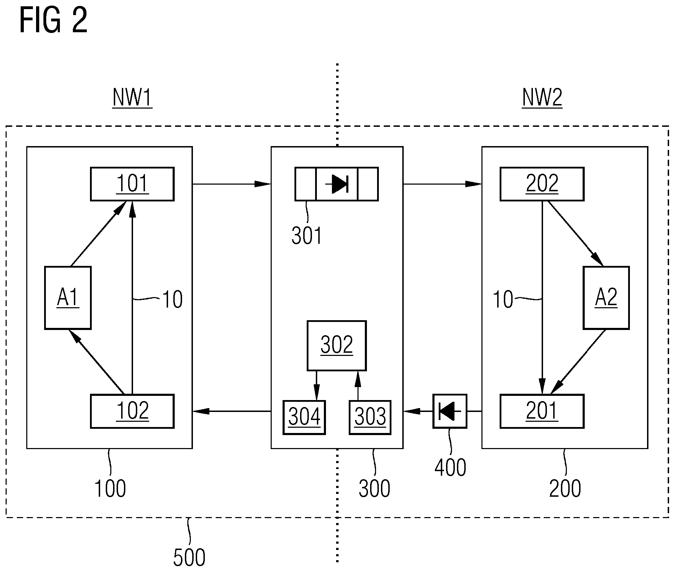

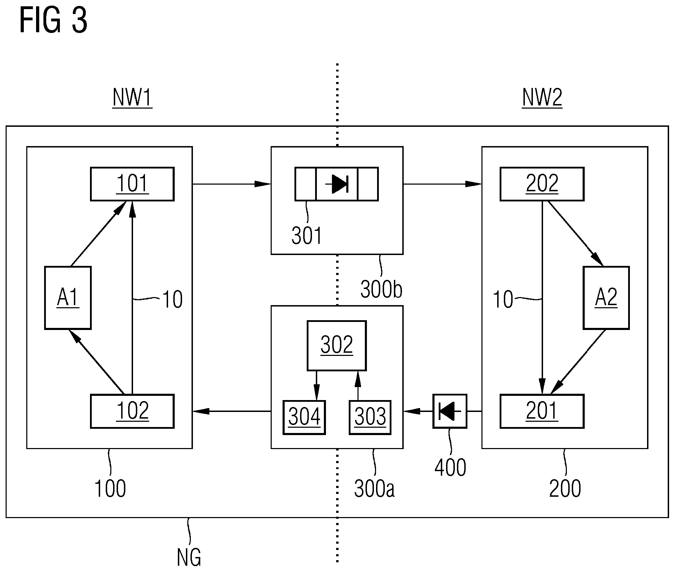

Figur 1 zeigt ein Ablaufdiagramm eines erfindungsgemäßen computerimplementierten Verfahrens zur Datenübertragung zwischen einem ersten Netzwerk mit hoher Sicherheitsanforderung, wie z.B. einem industriellen Steuerungsnetzwerk, und einem zweiten Netzwerk mit geringer Sicherheitsanforderung, wie z.B. einem Überwachungsnetzwerk. Das Verfahren kann mittels einer erfindungsgemäßen Übertragungsvorrichtung wie in den Figuren 2 und 3 beispielhaft dargestellt durchgeführt werden.

Beispielsweise können Sensordaten aus einem industriellen Steuerungsnetzwerk in ein Überwachungsnetzwerk zur Überwachung oder Analyse des Steuerungsnetzwerks übertragen werden. Dabei soll insbesondere die Kommunikation zwischen den Netzwerken unidirektional sein, so dass insbesondere lediglich erlaubter Datenverkehr vom Überwachungsnetzwerk an das industrielle Steuerungsnetzwerk zugelassen wird.

Im Schritt S1 wird eine erste Session zur Datenübertragung zwischen dem ersten und dem zweiten Netzwerk aufgebaut. Insbesondere wird die erste Session zwischen der Sendeeinheit im ersten Netzwerk und der Empfangseinheit im zweiten Netzwerk aufgebaut.

Im Schritt S2 wird ein erstes Datenpaket, z.B. ein Kontrolldatenpaket, von der Sendeeinheit des ersten Netzwerks an eine erste Einwegkommunikationseinheit, die zwischen dem ersten und zweiten Netzwerk angeordnet ist, übermittelt und von dort an das zweite Netzwerk weitergeleitet. Ein Kontrolldatenpaket umfasst beispielsweise Informationen zur Übertragung, zur Durchführung einer Empfangsbestätigung und/oder einer Vollständigkeitsprüfung der transferierten Nutzdaten.

Die erste Einwegkommunikationseinheit kann insbesondere als Datendiode oder als Mithöreinrichtung ausgebildet sein und dient dazu, eine unidirektionale Datenübertragung vom ersten in das zweite Netzwerk zu realisieren.

Nach der Übermittlung des ersten Kontrolldatenpakets, kann, bei Akzeptanz des ersten Kontrolldatenpakets durch die Empfangseinheit im zweiten Netzwerk, mindestens ein Nutzdatenpaket, das Nutzdaten umfasst, vom ersten an das zweite Netzwerk übermittelt werden. Dazu wird zunächst im Schritt S3 des Verfahrens eine zweite Session und eine dritte Session zwischen dem ersten und zweiten Netzwerk aufgebaut, wobei, Schritt S4, ein weiteres Datenpaket, beispielsweise ein Kontrolldatenpaket, über eine Einwegkommunikationseinheit und eine Validierungseinheit an das zweite Netzwerk übermittelt wird.

Die zweite Session wird zwischen der Sendeeinheit im zweiten Netzwerk und der Empfangseinheit, die der Validierungseinheit zugeordnet ist und insbesondere auf einer gemeinsamen Komponente eingerichtet sein kann, aufgebaut. Wenn alle Datenpakete der Session empfangen sind, werden diese von der Empfangseinheit an die Validierungseinheit weitergeleitet. Derart wird eine Validierung der Datenpakete lediglich pro Session erzielt.

In der Validierungseinheit wird das Kontrolldatenpaket anhand einer vorgegebenen Regel validiert, Schritt S5. Es wird lediglich Datenverkehr vom zweiten in das erste Netzwerk geprüft. Anhand der Regel wird festgelegt, ob ein Datenpaket erlaubt ist und passieren darf, d.h. es handelt sich um eine positive Validierung, oder abgelehnt wird, d.h. negative Validierung. Bei einer positiven Validierung, Schritt S6, wird die dritte Session zwischen einer Sendeeinheit, die der Validierungseinheit zugeordnet ist und insbesondere auf einer gemeinsamen Komponente eingerichtet sein kann, aufgebaut und das Kontrolldatenpaket von der Validierungseinheit an eine Empfangseinheit im ersten Netzwerk übertragen.

Beispielsweise kann das positiv validierte Kontrolldatenpaket Informationen über die akzeptierte Datenübertragung umfassen.

Diese Information wird an das erste Netzwerk zurückübermittelt. Anschließend kann eine Datenübertragung von Nutzdaten vom ersten in das zweite Netzwerk gestartet werden, Schritt S7. Die Nutzdaten können anschließend von der Empfangseinheit im zweiten Netzwerk an eine Applikation weitergeleitet werden.

Bei negativer Validierung des vom ersten Netzwerk übermittelten Kontrolldatenpakets, kann die Validierungseinheit ein weiteres Kontrolldatenpaket ausstellen, das sowohl an das erste als auch an das zweite Netzwerk übermittelt werden kann.

Figur 2 zeigt in Blockdarstellung eine Variante der erfindungsgemäßen Übertragungsvorrichtung 500. Die Übertragungsvorrichtung 500 kann insbesondere aus drei separaten Hardware-Komponenten 100, 200 und 300 bestehen, wobei die erste Komponente 100 im ersten Netzwerk NW1 mit hoher Sicherheitsanforderung, die zweite Komponente 200 im zweiten Netzwerk NW2 mit geringerer Sicherheitsanforderung und die dritte Komponente 300 zwischen den beiden Netzwerken NW1, NW2 angeordnet ist.

Die erste Komponente 100 umfasst eine erste Empfangseinheit 102 und eine erste Sendeeinheit 101, z.B. einen Server 102 und einen Client 101. Die Empfangseinheit 102 und die erste Sendeeinheit 101 können Daten austauschen. Insbesondere können derart Bestätigungsnachrichten 10 übertragen werden. Die erste Empfangseinheit 102 und die erste Sendeeinheit 101 können mit einer Applikation A1 im ersten Netzwerk NW1 kommunizieren. Eine Applikation A1 kann beispielsweise Nutzdaten generieren oder abrufen. Insbesondere können diese Nutzdaten, z.B. Sensordaten, von der Applikation A1 an die Sendeeinheit 101 übermittelt werden.

Die zweite Komponente 200 umfasst eine zweite Empfangseinheit 202 und eine zweite Sendeeinheit 201, z.B. einen Server 202 und Client 201. Diese können insbesondere Bestätigungsnachrichten 10 austauschen. Des Weiteren können die zweite Empfangseinheit 202 und die zweite Sendeeinheit 201 mit einer Applikation A2 im zweiten Netzwerk Datenpakete austauschen.

Die dritte Komponente 300 umfasst eine erste Einwegkommunikationseinheit 301, die insbesondere als Datendiode realisiert sein kann, eine dritte Empfangseinheit 303, eine dritte Sendeeinheit 304 und eine Validierungseinheit 302. Die dritte Empfangseinheit 303 und eine dritte Sendeeinheit 304 sind insbesondere der Validierungseinheit 302 zugeordnet.

Die erste Einwegkommunikationseinheit 301 ist derart ausgebildet, einen Datenverkehr vom ersten Netzwerk NW1 in das zweite Netzwerk NW2 unidirektional zu realisieren. Die erste Einwegkommunikationseinheit 301 leitet Datenpakete, vorzugsweise ohne diese zu verändern, lediglich weiter.

Die Validierungseinheit 302 validiert Datenpakete, die vom zweiten Netzwerk NW2 an das erste Netzwerk NW1 gesendet werden, anhand mindestens einer vorgegebenen Regel. Die Übertragung der Datenpakete vom zweiten Netzwerk NW2 an das erste Netzwerk NW1 erfolgt des Weiteren über eine zweite Einwegkommunikationseinheit 400, z.B. eine Datendiode, die beispielsweise zwischen der zweiten und dritten Komponente angeordnet sein kann.

Alternativ (nicht gezeigt) kann die zweite Einwegkommunikationseinheit 400 zwischen der dritten Komponente 300 und der ersten Komponente 100 angeordnet sein, wobei sie die Datenübertragung vom zweiten Netzwerk NW2 ins erste Netzwerk NW1 verwaltet. Als weitere Alternative können auch zwei Einwegkommunikationseinheiten für die Datenübertragung vom zweiten NW2 ins erste Netzwerk NW1 genutzt werden, wobei eine Einwegkommunikationseinheit zwischen der zweiten Komponente 200 und dritten Komponente 300 und die andere Einwegkommunikationseinheit zwischen der dritten Komponente 300 und ersten Komponente 100 angeordnet sein kann.

In einer weiteren Variante kann die zweite Einwegkommunikationseinheit 400 die dritte Empfangseinheit 303 und/oder die dritte Sendeeinheit 304 und/oder die Validierungseinheit 302 umfassen (nicht dargestellt) bzw. die genannten Einheiten können in einer Einheit realisiert sein.

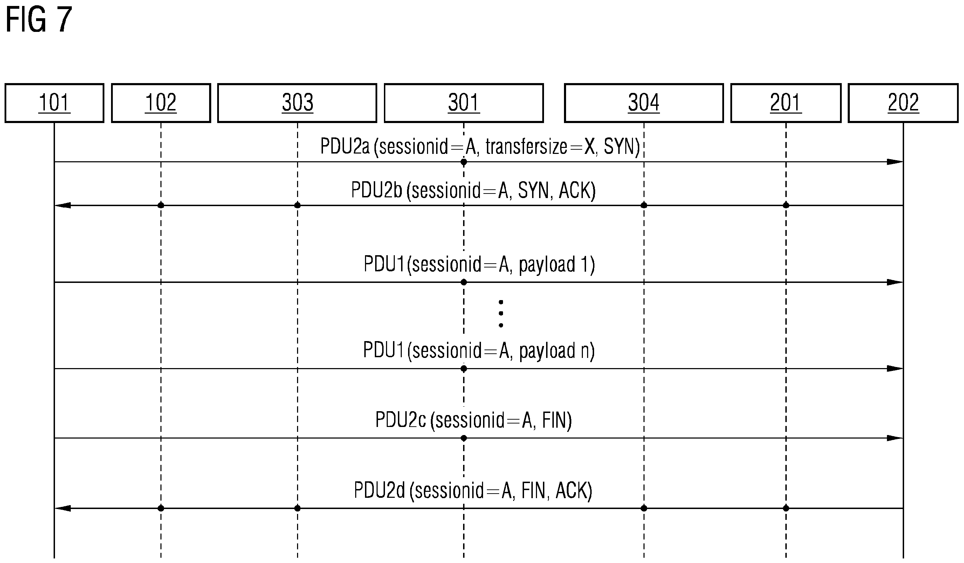

Eine Datenübertragung mit Empfangsbestätigung vom ersten Netzwerk NW1 an das zweite Netzwerk NW2, wobei über die Validierungseinheit eine Bestätigung zurückübermittelt wird, ist beispielhaft mittels Pfeile gezeigt und wird anhand Figur 7 näher erläutert.

Figur 3 zeigt eine weitere Ausführungsform einer erfindungsgemäßen Übertragungsvorrichtung 500. Die dritte Komponente ist hierbei als zwei separate Komponenten 300a, 300b realisiert. Diese Trennung der beiden unidirektionalen Links ist vorteilhaft, da keine Kommunikation zwischen den beiden Komponenten 300a, 300b vorgesehen ist. Derart kann die unidirektionale Datenübertragung vom ersten Netzwerk NW1 in das zweite Netzwerk NW2 über die eine separate dritte Komponente 300b und die unidirektionale Datenübertragung vom zweiten Netzwerk NW2 in das erste Netzwerk NW1 über die andere separate dritte Komponente 300a verlaufen.

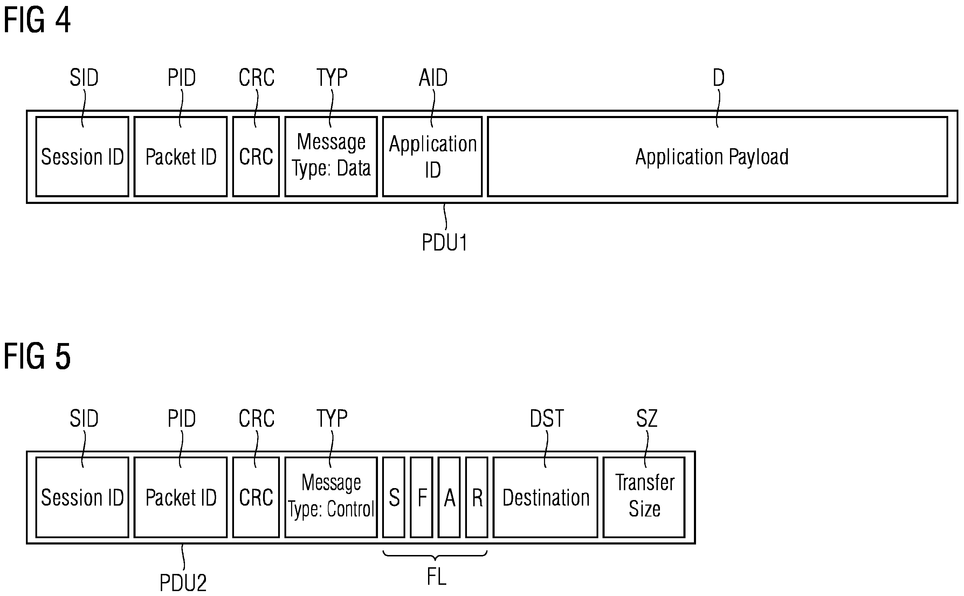

Figur 4 zeigt schematisch einen beispielhaften Aufbau eines Nutzdatenpakets PDU1. Ein Nutzdatenpaket PDU1 umfasst Nutzdaten D und eine Sitzungskennung SID. Außerdem kann ein Nutzdatenpaket PDU1 eine Datenpaket-Identifikationskennung PID, eine Prüfsumme CRC des Datenpakets, eine Typinformation TYP und/oder eine Applikations-Identifikationsnummer AID umfassen.

Die Sitzungskennung SID ordnet das Datenpaket einer bestimmten Sitzung zu. Die Datenpaket-Identifikationskennung PID identifiziert das Datenpaket eindeutig innerhalb einer Paketsequenz einer Sitzung. Die Prüfsumme CRC kann eine Prüfsumme des gesamten Datenpakets sein. Die Typinformation TYP gibt den Typ des Datenpakets an, insbesondere "DATA" für "Nutzdatenpaket". Die Applikations-Identifikationsnummer AID gibt den Typ der Applikation an, die den Nutzdaten zugeordnet ist.

Figur 5 zeigt schematisch einen beispielhaften Aufbau eines Kontrolldatenpakets PDU2. Ein Kontrolldatenpaket PDU2 umfasst eine Sitzungskennung SID, eine Datenpaket-Identifikationskennung PID und eine Sender- und/oder Empfängerinformation DST. Außerdem kann das Kontrolldatenpaket PID2 eine Prüfsumme CRC des Kontrolldatenpakets, eine Datenpaket-Identifikationskennung PID, eine Typinformation TYP, mindestens eine Kennzeichnung FL (engl. Flag) und/oder eine Information S2 über die Größe der Datenübertragung der jeweiligen Session umfassen. Die Typinformation kann insbesondere "CONTROL" für "Kontrolldatenpaket" umfassen. Die Kennzeichnung kann insbesondere auf "S" für den Aufbau einer neuen Sitzung, "F" für das Beenden einer Sitzung, "A" für die Bestätigung einer Sitzung oder "R" für das Abbrechen einer Sitzung gesetzt sein. Mittels der Kennzeichnung kann eine Empfangseinheit oder Sendeeinheit erkennen, um welche Art von Kontrolldatenpaket PDU2 es sich handelt. Die Kennzeichnungen "S" und "F" können insbesondere von einem Sender genutzt werden. Die Kennzeichnungen "A" und "R" können sowohl von Sender als auch von Empfänger genutzt werden. Die Information S2 über die Größe der Datenübertragung der jeweiligen Session ist insbesondere lediglich beim Aufbau einer Session vorhanden.

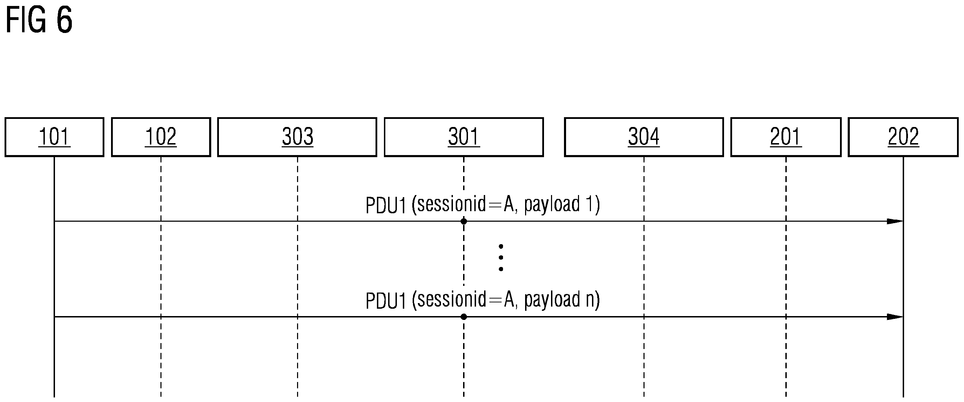

Figur 6 zeigt ein Sequenzdiagramm für eine Datenübertragung ohne Bestätigung einer Datenübertragung. Dieses nicht erfindungsgemäße Transferprotokoll, ermöglicht eine Datenübertragung vom einen in das andere Netzwerk durchzuführen, wobei lediglich eine Session aufgebaut und lediglich mindestens ein Nutzdatenpaket übertragen wird.

Eine Datenübertragung ohne eine Bestätigung wird insbesondere ohne die Übermittlung eines Kontrolldatenpakets realisiert. In diesem nicht erfindungsgemäßen Beispiel können Nutzdatenpakete ohne vorangegangene Übertragung eines Kontrolldatenpakets von einem Netzwerk in das andere Netzwerk übermittelt werden.

Nach Aufbau einer Session kann ein Nutzdatenpaket PDU1 direkt an den Empfänger übermittelt werden. Ohne Bestätigung kann beispielsweise keine Vollständigkeitsprüfung der übermittelten Nutzdaten durchgeführt werden. Beispielsweise baut ein Client 101 im ersten Netzwerk eine erste Session zum zweiten Netzwerk auf. Über den Server 202 wird das Nutzdatenpaket an das zweite Netzwerk übermittelt. Dazu wird das Datenpaket von der erste Einwegkommunikationseinheit 301 an den Server 202 des zweiten Netzwerks übermittelt. In anderen Worten, der Client 101 im ersten Netzwerk startet ohne die Übermittlung eines Kontrolldatenpakets die Übertragung von Nutzdaten an den Server 202. Die erste Einwegkommunikationseinheit 301 leitet die Nutzdatenpakete ohne Überprüfung oder Modifizierung weiter.

Für eine Übertragung vom zweiten Netzwerk ins erste Netzwerk ohne Bestätigung (nicht dargestellt) wird ein Datenpaket in der Validierungseinheit geprüft. Dazu werden zwei individuelle Sitzungen mit einem Zwischenschritt aufgebaut: eine Sitzung vom Client 201 im zweiten Netzwerk zum Client 303 auf der dritten Komponente, eine Validierung in der Validierungseinheit 302 und eine weitere Sitzung vom Server 304 der dritten Komponente zum Server 102 des zweiten Netzwerks.

Figur 7 zeigt ein Sequenzdiagramm für eine Nutzdatenübertragung vom ersten Netzwerk in das zweite Netzwerk mit Bestätigung der Datenübertragung. Zunächst wird nach Sitzungsaufbau vom Client 101 des ersten Netzwerks ein erstes Kontrolldatenpaket PDU2a mit einer Datenübertragungsinformation "SYN" an den Server 202 des zweiten Netzwerks übermittelt. Die Anfrage wird vom Server 202 auf Akzeptanz geprüft und bei Akzeptanz wird ein zweites Kontrolldatenpaket PDU2b, das eine Bestätigungskennung "A" oder "ACK" umfasst, vom Server 202 an den Client 102 des ersten Netzwerks übermittelt. Dazu wird das zweite Kontrolldatenpaket PDU2b zunächst vom Server 202 an den Client 201 des zweiten Netzwerks und vom Client 201 an den Server 304 der dritten Komponente weitergeleitet. Das zweite Kontrolldatenpaket PDU2b passiert die Validierungseinheit 301 und wird dort anhand einer Regel validiert. Bei erfolgreicher Validierung wird das zweite Kontrolldatenpaket PDU2b vom Client 303 der dritten Komponente an den Server 102 des ersten Netzwerks übermittelt. Der Server 102 des ersten Netzwerks leitet das zweite Kontrolldatenpaket PDU2b an den Client 101 des ersten Netzwerks weiter.

Sobald die Bestätigung beim Client 101 im ersten Netzwerk vorliegt, kann dieser mindestens ein Nutzdatenpaket PDU1 über die erste Einwegkommunikationseinheit an den Server 202 des zweiten Netzwerks übertragen. Insbesondere werden lediglich die Nutzdatenpakete PDU1, denen die korrekte Sitzungskennung für die bestehende Sitzung zugeordnet ist, übertragen. Sobald alle Nutzdatenpakete der Sitzung übertragen sind, sendet der Client 101 ein drittes Kontrolldatenpaket PDU2c, das Informationen über das Ende der Sitzung umfasst, d.h. mit einer Kennung "F" bzw. "FIN", an den Server 202 im zweiten Netzwerk. Sobald der Server 202 das dritte Kontrolldatenpaket PDU2c empfangen hat, übermittelt er ein viertes Kontrolldatenpaket PDU2d an den Client 101 im ersten Netzwerk. Anhand des ersten Kontrolldatenpakets PDU2a und des dritten Kontrolldatenpakets PDU2c kann vom Server 202 im zweiten Netzwerk eine Vollständigkeit der übertragenen Nutzdatenpakete PDU1 ermittelt werden. Beispielsweise kann dies anhand der jeweiligen Prüfsumme der Kontrolldatenpakete PDU1a, PDU1c überprüft werden. Das Ergebnis dieser Prüfung kann beispielsweise im vierten Kontrolldatenpaket PDU2d dem ersten Netzwerk übermittelt werden. Falls beispielsweise die übermittelten Nutzdatenpakete PDU1 nicht vollständig oder fehlerhaft sind, kann derart eine erneute Übertragung initiiert werden.

Ein Client oder ein Server kann eine Übertragung jederzeit abbrechen, indem ein Kontrolldatenpaket PDU2, das die entsprechende Sitzungskennung und ggf. zusätzlich Informationen umfasst, übermittelt wird. Der Empfang dieses Kontrolldatenpakets und somit das Beenden der Sitzung muss vom Empfänger bestätigt werden, indem ein weiteres Kontrolldatenpaket an den Sender zurückübermittelt wird.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zur Datenübertragung zwischen einem ersten Netzwerk (NW1) mit hoher Sicherheitsanforderung und einem zweiten Netzwerk (NW2) mit geringer Sicherheitsanforderung, wobei
a) für eine Datenübertragung vom ersten Netzwerk (NW1) ins zweite Netzwerk (NW2) eine erste Sitzung zwischen dem ersten Netzwerk (NW1) und dem zweiten Netzwerk (NW2) aufgebaut wird (S1), ein erstes Kontrolldatenpaket von einer Sendeeinheit (101) im ersten Netzwerk (NW1) über eine erste Einwegkommunikationseinheit (301), die zwischen dem ersten Netzwerk (NW1) und dem zweiten Netzwerk (NW2) angeordnet ist, an eine Empfangseinheit (202) im zweiten Netzwerk (NW2) übertragen wird (S2)
und
b) für eine Datenübertragung vom zweiten Netzwerk (NW2) ins erste Netzwerk (NW1) eine zweite Sitzung aufgebaut (S3) und ein zweites Kontrolldatenpaket von einer Sendeeinheit (201) im zweiten Netzwerk (NW2) über eine zweite Einwegkommunikationseinheit (400) an eine Validierungseinheit (302), die zwischen dem ersten Netzwerk (NW1) und dem zweiten Netzwerk (NW2) angeordnet ist, übertragen wird (S4),
- das zweite Kontrolldatenpaket anhand einer vorgegebenen Regel in der Validierungseinheit (302) validiert wird (S5) und
- bei positiver Validierung des zweiten Kontrolldatenpakets eine dritte Sitzung aufgebaut und das zweite Kontrolldatenpaket von der Validierungseinheit (302) an eine Empfangseinheit (102) im ersten Netzwerk (NW1) übertragen wird (S6), wobei
- das erste Kontrolldatenpaket im zweiten Netzwerk (NW2) auf Akzeptanz geprüft wird,
- wobei, falls das erste Kontrolldatenpaket akzeptiert wird, das zweite Kontrolldatenpaket vom zweiten Netzwerk (NW2) an die Validierungseinheit (302) übertragen, dort validiert und bei positiver Validierung an das erste Netzwerk (NW1) übertragen wird, mindestens ein Nutzdatenpaket vom ersten Netzwerk (NW1) an das zweite Netzwerk (NW2) übertragen wird und ein drittes Kontrolldatenpaket vom ersten Netzwerk (NW1) an das zweite Netzwerk (NW2) übertragen wird,
wobei anhand des ersten und des dritten Kontrolldatenpakets eine Vollständigkeit des mindestens einen übertragenen Nutzdatenpakets im zweiten Netzwerk (NW2) überprüft und ein viertes Kontrolldatenpaket, das das Prüfergebnis umfasst, an das erste Netzwerk (NW1) übertragen wird.

2. Computerimplementiertes Verfahren nach Anspruch 1, wobei zwischen der Empfangseinheit (102) und der Sendeeinheit (101) im ersten Netzwerk (NW1) und/oder zwischen der Empfangseinheit (202) und der Sendeeinheit (201) im zweiten Netzwerk (NW2) mindestens ein Datenpaket übertragen wird.

3. Computerimplementiertes Verfahren nach Anspruch 2, wobei ein Datenpaket als ein Nutzdatenpaket (PDU1) oder als ein Kontrolldatenpaket (PDU2) ausgestaltet ist.

4. Computerimplementiertes Verfahren nach einem der vorhergehenden Ansprüche, wobei, wenn die Validierung des zweiten Kontrolldatenpakets in der Validierungseinheit negativ ausfällt, ein drittes Kontrolldatenpaket von der Validierungseinheit ausgestellt und das dritte Kontrolldatenpaket über das erste Netzwerk an das zweite Netzwerk übertragen wird.

5. Computerimplementiertes Verfahren nach einem der vorhergehenden Ansprüche, wobei einem Nutzdatenpaket (PDU1) einer Sitzung eine eindeutige Sitzungskennung (SID) zugeordnet wird.

6. Computerimplementiertes Verfahren nach einem der vorhergehenden Ansprüche, wobei einem Kontrolldatenpaket (PDU2) eine eindeutige Sitzungskennung (SID), eine Datenpaket-Identifikationskennung (PID) und eine Sender- und/oder Empfängerinformation zugeordnet werden.

7. Computerimplementiertes Verfahren nach einem der vorhergehenden Ansprüche, wobei bei einer Datenübertragung vor der Übertragung eines Nutzdatenpakets (PDU1) ein Kontrolldatenpaket (PDU2) übertragen wird.

8. Computerimplementiertes Verfahren nach Anspruch 6, wobei bei Akzeptanz des Kontrolldatenpakets (PDU2) ein Nutzdatenpaket (PDU1) übertragen wird und bei Nicht-Akzeptanz des Kontrolldatenpakets (PDU2) die Datenübertragung abgebrochen und lediglich ein weiteres Kontrolldatenpaket (PDU2) zurück übertragen wird.

9. Übertragungsvorrichtung (500) eingerichtet zur Datenübertragung nach
einem der Ansprüche 1 bis 8 zwischen einem ersten Netzwerk (NW1) mit hoher Sicherheitsanforderung und einem zweiten Netzwerk (NW2) mit geringer Sicherheitsanforderung, umfassend
- eine erste Empfangseinheit (102) und eine erste Sendeeinheit (101), die jeweils im ersten Netzwerk (NW1) angeordnet sind,
- eine zweite Empfangseinheit (202) und eine zweite Sendeeinheit (201), die jeweils im zweiten Netzwerk (NW2) angeordnet sind,
- eine erste Einwegkommunikationseinheit (301), die zwischen dem ersten Netzwerk (NW1) und zweiten Netzwerk (NW2) angeordnet und derart eingerichtet ist, bei einer Datenübertragung von der ersten Sendeeinheit (101) zur zweiten Empfangseinheit (202) ein Datenpaket zu übertragen,
- eine zweite Einwegkommunikationseinheit (400), die zwischen dem zweiten Netzwerk (NW2) und dem ersten Netzwerk (NW1) angeordnet ist, für eine Datenübertragung vom zweiten in das erste Netzwerk,
und
- eine Validierungseinheit (302), die zwischen dem zweiten und ersten Netzwerk angeordnet und derart eingerichtet ist, bei einer Datenübertragung von der zweiten Sendeeinheit (201) zur ersten Empfangseinheit (102) ein Kontrolldatenpaket anhand einer vorgegebenen Regel zu validieren und bei positiver Validierung des Kontrolldatenpakets eine Sitzung aufzubauen und das Kontrolldatenpaket an die erste Empfangseinheit im ersten Netzwerk zu übertragen.

10. Übertragungsvorrichtung (500) nach Anspruch 8, wobei
- die erste Empfangseinheit (102) und die erste Sendeeinheit (101) auf einer ersten Komponente (100) im ersten Netzwerk (NW1),
- die zweite Empfangseinheit (202) und die zweite Sendeeinheit (201) auf einer zweiten Komponente (200) im zweiten Netzwerk (NW2),
und
- die Validierungseinheit (302) und die erste Einwegkommunikationseinheit (301) auf einer dritten Komponente (300) eingerichtet sind.

11. Übertragungsvorrichtung (500) nach Anspruch 8, wobei die erste Einwegkommunikationseinheit (301) und die Validierungseinheit (302) jeweils auf einer separaten Komponente (300a, 300b) eingerichtet sind.

12. Computerprogrammprodukt, umfassend Programmcodeteile, die bewirken, dass die Übertragungsvorrichtung (500) nach einem der Ansprüche 9 bis 11 die Schritte des Verfahrens nach einem der Ansprüche 1 bis 8 durchführt.

## Claims

1. Computer-implemented method for data transmission between a first network (NW1) having a high security requirement and a second network (NW2) having a low security requirement, wherein
a) a data transmission from the first network (NW1) to the second network (NW2) involves a first session being set up (S1) between the first network (NW1) and the second network (NW2) and a first control data packet being transmitted (S2) from a transmitting unit (101) in the first network (NW1) via a first one-way communication unit (301), arranged between the first network (NW1) and the second network (NW2), to a receiving unit (202) in the second network (NW2),
and
b) a data transmission from the second network (NW2) to the first network (NW1) involves a second session being set up (S3) and a second control data packet being transmitted (S4) from a transmitting unit (201) in the second network (NW2) via a second one-way communication unit (400) to a validation unit (302) arranged between the first network (NW1) and the second network (NW2),
- the second control data packet is validated (S5) in the validation unit (302) on the basis of a prescribed rule, and
- positive validation of the second control data packet results in a third session being set up and the second control data packet being transmitted (S6) from the validation unit (302) to a receiving unit (102) in the first network (NW1), wherein
- the first control data packet is checked in the second network (NW2) for acceptance,
- wherein, if the first control data packet is accepted, the second control data packet is transmitted from the second network (NW2) to the validation unit (302), validated there and, in the event of positive validation, transmitted to the first network (NW1), at least one payload data packet is transmitted from the first network (NW1) to the second network (NW2), and a third control data packet is transmitted from the first network (NW1) to the second network (NW2),
wherein the first and third control data packets are used to check a completeness of the at least one transmitted payload data packet in the second network (NW2), and a fourth control data packet comprising the result of the check is transmitted to the first network (NW1).

2. Computer-implemented method according to Claim 1, wherein at least one data packet is transmitted between the receiving unit (102) and the transmitting unit (101) in the first network (NW1) and/or between the receiving unit (202) and the transmitting unit (201) in the second network (NW2).

3. Computer-implemented method according to Claim 2, wherein a data packet is configured as a payload data packet (PDU1) or as a control data packet (PDU2).

4. Computer-implemented method according to one of the preceding claims, wherein, if the validation of the second control data packet in the validation unit has a negative outcome, a third control data packet is issued by the validation unit and the control data packet is transmitted to the second network via the first network.

5. Computer-implemented method according to one of the preceding claims, wherein a payload data packet (PDU1) of a session is assigned a unique session identifier (SID).

6. Computer-implemented method according to one of the preceding claims, wherein a control data packet (PDU2) is assigned a unique session identifier (SID), a data packet identification identifier (PID) and transmitter and/or receiver information.

7. Computer-implemented method according to one of the preceding claims, wherein a data transmission involves a control data packet (PDU2) being transmitted before the transmission of a payload data packet (PDU1).

8. Computer-implemented method according to Claim 6, wherein acceptance of the control data packet (PDU2) results in a payload data packet (PDU1) being transmitted and nonacceptance of the control data packet (PDU2) results in the data transmission being terminated and just a further control data packet (PDU2) being transmitted back.

9. Transmission apparatus (500) designed for data transmission according to one of Claims 1 to 8 between a first network (NW1) having a high security requirement and a second network (NW2) having a low security requirement, comprising
- a first receiving unit (102) and a first transmitting unit (101), which are each arranged in the first network (NW1),
- a second receiving unit (202) and a second transmitting unit (201), which are each arranged in the second network (NW2),
- a first one-way communication unit (301), which is arranged between the first network (NW1) and the second network (NW2) and designed to transmit a data packet in the event of a data transmission from the first transmitting unit (101) to the second receiving unit (202),
- a second one-way communication unit (400), arranged between the second network (NW2) and the first network (NW1), for a data transmission from the second to the first network,
and
- a validation unit (302), which is arranged between the second and first networks and designed to validate a control data packet on the basis of a prescribed rule in the event of a data transmission from the second transmitting unit (201) to the first receiving unit (102) and, in the event of positive validation of the control data packet, to set up a session and to transmit the control data packet to the first receiving unit in the first network.

10. Transmission apparatus (500) according to Claim 8, wherein
- the first receiving unit (102) and the first transmitting unit (101) are installed on a first component (100) in the first network (NW1),
- the second receiving unit (202) and the second transmitting unit (201) are installed on a second component (200) in the second network (NW2),
and
- the validation unit (302) and the first one-way communication unit (301) are installed on a third component (300) .

11. Transmission apparatus (500) according to Claim 8, wherein the first one-way communication unit (301) and the validation unit (302) are each installed on a separate component (300a, 300b) .

12. Computer program product, comprising program code portions that cause the transmission apparatus (500) according to one of Claims 9 to 11 to carry out the steps of the method according to one of Claims 1 to 8.

## Revendications

1. Procédé implémenté par ordinateur pour la transmission de données entre un premier réseau (NW1) avec une exigence de sécurité élevée et un deuxième réseau (NW2) avec une faible exigence de sécurité, dans lequel
a) pour une transmission de données depuis le premier réseau (NW1) vers le deuxième réseau (NW2), une première session est établie (S1) entre le premier réseau (NW1) et le deuxième réseau (NW2), un premier paquet de données de contrôle est transmis (S2) depuis une unité d'émission (101) dans le premier réseau (NW1) par l'intermédiaire d'une première unité de communication à sens unique (301), laquelle est disposée entre le premier réseau (NW1) et le deuxième réseau (NW2), à une unité de réception (202) dans le deuxième réseau (NW2)
et
b) pour une transmission de données depuis le deuxième réseau (NW2) vers le premier réseau (NW1), une deuxième session est établie (S3) et un deuxième paquet de données de contrôle est transmis (S4) depuis une unité d'émission (201) dans le deuxième réseau (NW2) par l'intermédiaire d'une deuxième unité de communication à sens unique (400) à une unité de validation (302), laquelle est disposée entre le premier réseau (NW1) et le deuxième réseau (NW2),
- le deuxième paquet de données de contrôle est validé (S5) à l'aide d'une règle prédéfinie dans l'unité de validation (302) et
- dans le cas d'une validation positive du deuxième paquet de données de contrôle, une troisième session est établie et le deuxième paquet de données de contrôle est transmis (S6) depuis l'unité de validation (302) à une unité de réception (102) dans le premier réseau (NW1), dans lequel
- le premier paquet de données de contrôle est testé pour acceptation dans le deuxième réseau (NW2),
- dans lequel, dans le cas où le premier paquet de données de contrôle est accepté, le deuxième paquet de données de contrôle est transmis depuis le deuxième réseau (NW2) à l'unité de validation (302), y est validé et, dans le cas d'une validation positive, est transmis au premier réseau (NW1), au moins un paquet de données utiles est transmis depuis le premier réseau (NW1) au deuxième réseau (NW2) et un troisième paquet de données de contrôle est transmis depuis le premier réseau (NW1) au deuxième réseau (NW2), dans lequel, à l'aide du premier et du troisième paquet de données de contrôle, une exhaustivité de l'au moins un paquet de données utiles transmis est vérifiée dans le deuxième réseau (NW2) et un quatrième paquet de données de contrôle, lequel comporte le résultat du test, est transmis au premier réseau (NW1).

2. Procédé implémenté par ordinateur selon la revendication 1, dans lequel au moins un paquet de données est transmis entre l'unité de réception (102) et l'unité d'émission (101) dans le premier réseau (NW1) et/ou entre l'unité de réception (202) et l'unité d'émission (201) dans le deuxième réseau (NW2) .

3. Procédé implémenté par ordinateur selon la revendication 2, dans lequel un paquet de données est conçu sous la forme d'un paquet de données utiles (PDU1) ou sous la forme d'un paquet de données de contrôle (PDU2).

4. Procédé implémenté par ordinateur selon l'une des revendications précédentes, dans lequel, lorsque la validation du deuxième paquet de données de contrôle dans l'unité de validation se révèle négative, un troisième paquet de données de contrôle est délivré par l'unité de validation et le troisième paquet de données de contrôle est transmis par l'intermédiaire du premier réseau au deuxième réseau.

5. Procédé implémenté par ordinateur selon l'une des revendications précédentes, dans lequel un identifiant de session unique (SID) est associé à un paquet de données utiles (PDU1) d'une session.

6. Procédé implémenté par ordinateur selon l'une des revendications précédentes, dans lequel un identifiant de session unique (SID), un identifiant d'identification de paquet de données (PID) et une information sur l'émetteur et/ou le destinataire sont associés à un paquet de données de contrôle (PDU2).

7. Procédé implémenté par ordinateur selon l'une des revendications précédentes, dans lequel, dans le cas d'une transmission de données avant la transmission d'un paquet de données utiles (PDU1), un paquet de données de contrôle (PDU2) est transmis.

8. Procédé implémenté par ordinateur selon la revendication 6, dans lequel, dans le cas de l'acceptation du paquet de données de contrôle (PDU2), un paquet de données utiles (PDU1) est transmis et, dans le cas de la non-acceptation du paquet de données de contrôle (PDU2), la transmission de données est interrompue et uniquement un autre paquet de données de contrôle (PDU2) est retransmis.

9. Dispositif de transmission (500) configuré pour la transmission de données selon l'une des revendications 1 à 8 entre un premier réseau (NW1) avec une exigence de sécurité élevée et un deuxième réseau (NW2) avec une faible exigence de sécurité, comportant
- une première unité de réception (102) et une première unité d'émission (101), lesquelles sont respectivement disposées dans le premier réseau (NW1),
- une deuxième unité de réception (202) et une deuxième unité d'émission (201), lesquelles sont respectivement disposées dans le deuxième réseau (NW2),
- une première unité de communication à sens unique (301), laquelle est disposée entre le premier réseau (NW1) et le deuxième réseau (NW2) et configurée de telle sorte, dans le cas d'une transmission de données depuis la première unité d'émission (101) vers la deuxième unité de réception (202), à transmettre un paquet de données,
- une deuxième unité de communication à sens unique (400), laquelle est disposée entre le deuxième réseau (NW2) et le premier réseau (NW1), pour une transmission de données depuis le deuxième vers le premier réseau,
et
- une unité de validation (302), laquelle est disposée entre le deuxième et le premier réseau et configurée de telle sorte, dans le cas d'une transmission de données depuis la deuxième unité d'émission (201) vers la première unité de réception (102), à valider un paquet de données de contrôle à l'aide d'une règle prédéfinie et, dans le cas d'une validation positive du paquet de données de contrôle, à établir une session et à transmettre le paquet de données de contrôle à la première unité de réception dans le premier réseau.

10. Dispositif de transmission (500) selon la revendication 8, dans lequel
- la première unité de réception (102) et la première unité d'émission (101) sont configurées sur un premier composant (100) dans le premier réseau (NW1),
- la deuxième unité de réception (202) et la deuxième unité d'émission (201) sont configurées sur un deuxième composant (200) dans le deuxième réseau (NW2),
et
- l'unité de validation (302) et la première unité de communication à sens unique (301) sont configurées sur un troisième composant (300).

11. Dispositif de transmission (500) selon la revendication 8, dans lequel la première unité de communication à sens unique (301) et l'unité de validation (302) sont configurées respectivement sur un composant distinct (300a, 300b).

12. Produit de programme informatique, comportant des parties de code de programme, lesquelles amènent le dispositif de transmission (500) selon l'une des revendications 9 à 11 à mettre en œuvre les étapes du procédé selon l'une des revendications 1 à 8.
